Europäisches Patentamt

European Patent Office

Office européen des brevets

(11) Veröffentlichungsnummer: **0 085 856**
**A1**

(12) **EUROPÄISCHE PATENTANMELDUNG**

(21) Anmeldenummer: **83100430.4**

(22) Anmeldetag: **19.01.83**

(51) Int. Cl.³: **C 03 B 11/16**
**C 03 B 11/10**

(30) Priorität: **05.02.82 DE 3203863**

(43) Veröffentlichungstag der Anmeldung:
**17.08.83 Patentblatt 83/33**

(84) Benannte Vertragsstaaten:
**AT BE CH DE FR GB IT LI LU NL SE**

(71) Anmelder: **Forma Glas GmbH & Co. KG**
**Schwarzstrasse 21**
**A-5020 Salzburg(AT)**

(72) Erfinder: **König, Wilhelm**
**Franz-Belz-Strasse**
**D-8372 Zwiesel(DE)**

(74) Vertreter: **Patentanwälte Schulze Horn und Hoffmeister**
**Goldstrasse 36**
**D-4400 Münster(DE)**

(54) Verfahren zum Pressen von Glasgegenständen und Vorrichtung zur Durchführung dieses Verfahrens.

㊗ Verfahren zum Pressen von Glasgegenständen oder Vorpressen von weiterzuverarbeitenden Glasposten, wobei ein Glasposten in eine Form eingegeben und mittels eines Preßstempels gepreßt und nach ausreichender Abkühlung aus der Form entnommen wird, wobei die formnächste Stellung des Preßstempels bestimmt und mit der Stellung verglichen wird, die dem gewünschten Postengewicht entspricht, und das Postengewicht erhöht wird, wenn der Preßstempel zu weit in die Form eingefahren ist, und das Postengewicht verringert wird, wenn der Preßstempel nicht weit genug eingefahren ist sowie Vorrichtung zur Durchführung des Verfahrens mit einer Form und einem Preßstempel, der von einem Kraftmittel bewegt wird, wobei ein Positionsmelder und -anzeiger (7) für die Stellung des Preßstempels und ein die Signale des Positionsmelders (7) auswertende und in Abhängigkeit von der gemessenen Abweichung das Postengewicht steuernde Recheneinheit vorhanden ist.

## Verfahren zum Pressen von Glasgegenständen und Vorrichtung zur Durchführung dieses Verfahrens

Die Erfindung betrifft ein Verfahren zum Pressen oder Verpressen von Glasgegenständen, wobei ein Glasposten in eine Form eingegeben und mittels eines Preßstempels gepreßt und nach ausreichender Abkühlung aus der Form entnommen wird, sowie eine Vorrichtung zur Durchführung dieses Verfahrens.

Es ist bereits seit langem bekannt, zum Herstellen von Glasgegenständen oder von Vorpreßlingen (sogenannten Kolbeln) Glasposten in eine Form einzugeben, die in der Regel geteilt ist und diese dann durch einen Preßstempel zu fertigenden Artikeln oder halbfertigen Glasposten auszupressen. Während dieses Preßvorganges wird das flüssig als Tropfen eingegebene Glas abgekühlt und erstarrt so weit, daß es formbeständig bleibt und ausgeformt werden kann.

Bei einem solchen Preßvorgang wird versucht, ein möglichst gleichmäßiges Posten- oder Tropfengewicht zu erzielen und der Preßstempel wird mit einer wegunabhängigen Kraft in die Form oder an die Form gepreßt, wobei die Glasmenge die Endposten des Preßstempels begrenzt, der Glasgegenstand wird also in seiner Dicke und/oder Höhe durch die eingegebene Glasmenge bestimmt. Wenn am fertigen Glasgegenstand oder dem Vorpreßling zu erkennen war, daß diese Maße sich in allzu unzulässiger Weise änderten, wurde nach Gefühl eine Korrektur des Postengewichtes vorgenommen.

Ersichtlicherweise nachteilig ergibt sich dadurch eine gewisse Ungleichmäßigkeit der produzierten Gegenstände, welche nicht nur die Ausschußquote stark erhöhen kann, sondern wodurch auch die weitere Bearbeitung erschwert oder verhindert wird. Dies gilt insbesondere bei Vorpreßlingen oder Kölbeln, die in noch weichem oder fast flüssigem Zustand ausgeformt werden und anschließend weitergepreßt oder geblasen werden. Wenn das Postengewicht hier zu stark abweicht, ist eine zufriedenstellende weitere Bearbeitung nicht mehr möglich.

Es ist demgemäß Aufgabe der Erfindung, ein Verfahren und eine Vorrichtung zur Durchführung dieses Verfahrens zu finden, bei welchem die vorgenannten Nachteile der Gewichtsungleichmäßigkeit des Kölbels oder des Fertigteils nicht mehr auftreten und bei denen Ausschußproduktionen aufgrund ungenügend genauer Postengewichte ausgeschlossen wird.

Das Verfahren gemäß der Erfindung soll einfach durchgeführt werden können, einer Automatisierung zugänglich sein und eine Vergleichmäßigung des Gewichtes und der Maße der Preßlinge in bisher nicht bekannter Art ermöglichen. Die Vorrichtung zur Durchführung des Verfahrens soll insbesondere einfach aufgebaut und zuverlässig sein, wobei die erzielbaren Bearbeitungs- bzw. Taktzeiten denen herkömmlicher Pressen entsprechen sollen bzw. die Taktzeiten sollen sich aufgrund des gleichmäßigeren Werkstoffes, der zu verarbeiten ist, sogar noch verbessern lassen. Es soll also die Ausschußquote aufgrund von variierenden Postengewichten verringert und die Qualität bzw. die Gleichmäßigkeit der Gestalt der erzeugten Produkte verbessert werden.

Diese Aufgabe wird erfindungsgemäß verfahrensmäßig dadurch gelöst, daß die formnächste Stellung des Preßstempels bestimmt und mit der Stellung verglichen wird, die dem gewünschten Postengewicht entspricht, und das Postengewicht erhöht wird, wenn der Preßstempel zu weit in die Form eingefahren ist, und das Postengewicht verringert wird, wenn der Preßstempel nicht weit genug eingefahren ist.

Der Preßstempel kann dabei die Pressung mit einer begrenzten, wegunabhängigen Kraft vornehmen.

Vorrichtungsgemäß wird die erfindungsgemäße Aufgabe bei einer Vorrichtung mit einer Form und einem Preßstempel, der von einem Kraftmittel bewegt wird, dadurch gelöst, daß ein Positionsmelder und -anzeiger für die Stellung des Preßstempels und eine die Signale des Positionsmelders auswertende und in Abhängigkeit von der gemessenen Abweichung das Postengewicht steuernde Recheneinheit vorhanden ist.

Um einen einfachen und robusten Aufbau der Vorrichtung zu erhalten, kann weiterhin vorteilhaft der Preßstempel über eine Kolbenstange mit dem Kolben einer Kolben-Zylinder-Einheit verbunden sein, deren Druckmedium unter einem einstellbar begrenztem Druck arbeitet.

Im einzelnen kann die Kolbenstange oder deren Verlängerung aus dem Zylinder der Kolben-Zylinder-Einheit heraus einen Positionsmelder und -anzeiger steuern, dessen Signale der Recheneinheit zugeführt werden.

Für den Fachmann überraschend hat es sich gezeigt, daß mit der Lösung nach der Erfindung die Genauigkeit des Gewichtes von Glasartikeln oder Kölbeln sich erheblich verbessert, wobei diese Verbesserung das 5 - 10fache gegenüber dem üblichen beträgt. Die durchschnittlichen Gewichtsabweichungen betragen also nur noch 1/5 oder 1/10 der sonst erzielbaren. Da die erfindungsgemäße Vorrichtung einfach aufgebaut ist und aus handelsüblichen Elementen besteht, kann von einer idealen Lösung der anstehenden Probleme gesprochen werden, da die Erkennung der Gewichtsabweichung unmittelbar nach der Entstehung des Tropfens möglich ist.

Im folgenden wird ein Ausführungsbeispiel der Erfindung anhand einer schematischen Darstellung näher beschrieben.

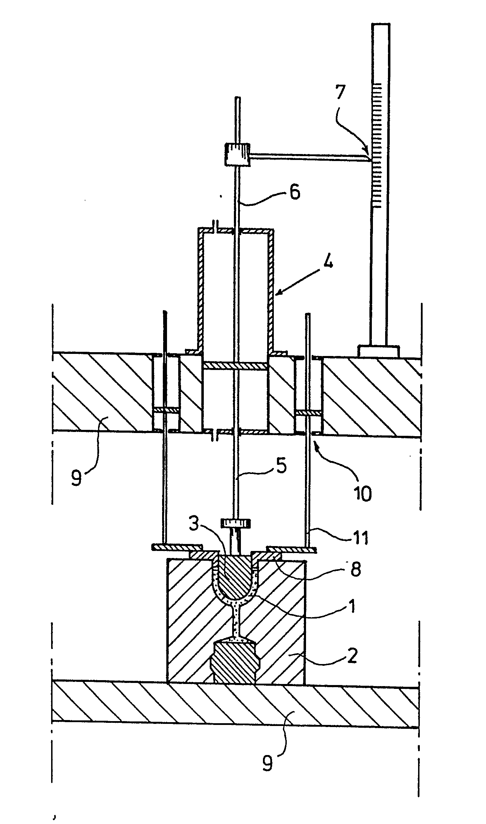

Gemäß der Figur besteht die erfindungsgemäße Vorrichtung aus einem Maschinengehäuse oder -bett 9, in welcher eine teilbare Form 2 angeordnet ist. Mit der Form zusammenwirkend ist ein Preßstempel 3 vorhanden, wobei zwischen diesen beiden Teilen das Glaswerkstück 1 ausgebildet wird. Auf die Ränder des Werkstückes 1 wirkt ein Niederhaltering 8, der oberhalb der Form 2 angeordnet ist und dessen Rand in den Spalt zwischen der Form 2 und dem Preßstempel 3 eingreift. Der Preßstempel 3 ist über eine Kolbenstange 5 mit einer Kolben-Zylinder-Einheit 4 verbunden, die mit einem Druckmittel, vorzugsweise Preßluft beaufschlagt wird. Die Kolbenstange 5 ist aus der Kolben-Zylinder-Einheit heraus mit einer Verlängerung 6 versehen, welche mit einem Positionsmelder und -anzeiger zusammenwirkt. Dieser ist in der Zeichnung schematisch als an einer Skala entlangfahrender Zeiger dargestellt.

Positionsmelder sind handelsübliche Elemente, die je nach Position des Preßstempels in dem vorliegenden Fall elektrische Signale abgeben bzw. deren Signale je nach Stand des Preßstempels summiert von einer Recheneinheit verarbeitet werden, falls diese nicht das direkt abgegebene Signal verarbeitet.

Über den Druck des Druckmittels kann der Druck des Preßstempels auf das Werkstück bzw. dessen Materials eingestellt werden.

Ein Niederhaltering 8 wird von Kolbenstangen 11 der
Kolben-Zylinder-Einheit 10 abgestützt, so daß auch der
Niederhaltering 8 mit wegunabhängiger Kraft an den Rand
des Werkstücks 1 angepaßt wird.

Die genannte Recheneinheit steuert für die Postion,
in welcher der Preßstempel am weitesten in die Form
eingedrungen oder bei bestimmten Werkstücken an die
Form herangekommen ist, eine Einrichtung zur Regulierung
des Tropfengewichtes. Das Tropfengewicht kann dabei
über eine Temperaturregelung, eine  Beeinflussung des
Schneidvorganges oder über andere bekannte Maßnahmen
eingestellt werden. Die Tropfengewichtseinstellung besteht ebenfalls wie die Recheneinheit aus bekannten und
handelsüblichen Elementen und eine weitere Beschreibung
derselben kann daher entfallen.

Das erfindungsgemäße Verfahren arbeitet jetzt wie folgt:

In die Form 2 wird ein Glasposten oder -tropfen eingegeben und durch Einfahren des Preßstempels 3 zu einem
Kölbel oder einem fertigen Glasartikel ausgepreßt. Dabei
wird durch das in die Form eingepreßte Glasvolumen
(Gewicht) die Endposition des Preßstempels bestimmt.
Wenn das Glasvolumen höher ist als gewünscht, fährt der
Preßstempel 3 nur weniger als im Standardfall in die Form
ein und wenn das Glasvolumen zu gering ist, wird die Eindringtiefe gegenüber dem Standardfall vergrößert.

Das Gewicht des Glaspostens ist für den Standardfall,
d. h. für einen Artikel mit genau dem gewünschten Gewicht bzw. der gewünschten Form durch Versuche empirisch
zu bestimmen. Die Standardstellung des Stempels 3 bzw.

der Kolbenstangen 5 und 6 kann dabei auch auf andere, genauso aufgebaute Pressen übertragen werden. Die Eichung wird dabei im Normalbetriebszustand, d. h. nach Erwärmung auf Betriebstemperatur beim Dauerbetrieb vorgenommen.

Wird von dem Positionsmelder und -anzeiger eine zu große Eindringtiefe des Preßstempels 3 gemeldet, so wird über den Rechner eine Vergrößerung des Postengewichts eingeregelt. Wird aber durch den Positionsmelder und -anzeiger 7 eine zu geringe Eindringtiefe gemeldet, so wird das Postengewicht entsprechend verringert. Die hierfür erforderliche Proportionalität des Eingangssignals zu dem Ausgangssignal kann empirisch ermittelt und der (nicht gezeigten) Rechnereinheit eingegeben werden.

Die Lösung nach der Erfindung bietet den Vorteil daß auch Schwankungen in der Glashomogenität bzw. -viskosität, die auch während des Dauerbetriebs eines Glasschmelzofens auftreten können und das Tropfengewicht automatisch beeinflussen, ausgeglichen werden können. Gleiches gilt für eine Änderung des Glasstandes in einer Arbeitswanne oder einem Speiser. Mit der Erfindung kann also verhindert werden, daß Unregelmäßigkeiten in der Führung eines Glasschmelzofens auf die Werkstückherstellung durchschlagen, und die Ausschußquote kann entscheidend gesenkt werden.

Patentansprüche:

1. Verfahren zum Pressen oder Verpressen von Glasgegenständen, wobei ein Glasposten in eine Form eingegeben und mittels eines Preßstempels gepreßt und nach ausreichender Abkühlung aus der Form entnommen wird, dadurch gekennzeichnet, daß die formnächste Stellung des Preßstempels bestimmt und mit der Stellung verglichen wird, die dem gewünschten Postengewicht entspricht und das Postengewicht erhöht wird, wenn der Preßstempel zu weit in die Form eingefahren ist,und das Postengewicht verringert wird, wenn der Preßstempel nicht weit genug eingefahren ist.

2. Verfahren nach Anspruch 1, dadurch gekennzeichnet, daß der Preßstempel (3) die Pressung mit einer begrenzten, wegunabhängigen Kraft vornimmt.

3. Vorrichtung zur Durchführung des Verfahrens nach Anspruch 1 oder 2, mit einer Form und einem Preßstempel, der von einem Kraftmittel bewegt wird, dadurch gekennzeichnet, daß ein Positionsmelder und -anzeiger (7) für die Stellung des Preßstempels und eine die Signale des Positionsmelders (7) auswertende und in Abhängigkeit von der gemessenen Abweichung das Postengewicht steuernde Recheneinheit vorhanden ist.

4. Vorrichtung nach Anspruch 3, dadurch gekennzeichnet, daß der Preßstempel (3) über eine Kolbenstange (5) mit dem Kolben einer Kolben-Zylinder-Einheit (4) verbunden ist, deren Druckmedium unter einem einstellbar begrenztem Druck arbeitet.

5. Vorrichtung nach Anspruch 4, dadurch gekennzeichnet, daß die Kolbenstange oder deren Verlängerung (6) aus dem Zylinder der Kolben-Zylinder-Einheit (4) heraus einen Positionsmelder und -anzeiger steuert, dessen Signale der Recheneinheit zugeführt werden.

Europäisches Patentamt

**EUROPÄISCHER RECHERCHENBERICHT**

**0085856**
Nummer der Anmeldung

EP 83 10 0430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | US-A-3 192 027  (WILHELM)  * Insgesamt * | 1,2,3, 5 | C 03 B   11/16 C 03 B   11/10 |
| X | EP-A-0 021 066  (VEBA-GLAS) * Insgesamt * | 1 | |
| X | EP-A-0 050 765  (HERMANN HEYE)  * Figures 5-8 * | 1,2,3, 5 | |
| Y | US-A-3 471 281  (BITTNER) * Insgesamt * | 1-5 | |
| A | DE-C-  190 806  (HECKMANN) * Insgesamt * | 1,3 | RECHERCHIERTE SACHGEBIETE (Int. Cl. 3) |
| | ----- | | C 03 B   11/00 |

Der vorliegende Recherchenbericht wurde für alle Patentansprüche erstellt.

| Recherchenort DEN HAAG | Abschlußdatum der Recherche 25-04-1983 | Prüfer VAN DEN BOSSCHE W.L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82